# EUROPEAN PATENT APPLICATION

(11) **EP 4 661 384 A1**
(43) Date of publication of application: **10.12.2025**
(21) Application number: 25156241.9
(22) Date of filing: 06.02.2025
(51) Int. Cl.: H04N 1/00, G06F 3/12, G03G 15/00

(54) **IMAGE FORMING SYSTEM AND PROGRAM**

(30) Priority: 07.06.2024 JP 2024093171
(71) Applicant: FUJIFILM Business Innovation Corp., Minato-ku Tokyo (JP)
(72) Inventor: MIKAMI, Atsushi, Yokohama-shi, Kanagawa (JP); NISHIMURA, Takuya, Ebina-shi, Kanagawa (JP); IMAI, Tomoya, Yokohama-shi, Kanagawa (JP); INOUE, Daichi, Yokohama-shi, Kanagawa (JP)
(74) Representative: Kurig, Thomas

(57) **Abstract**

An image forming system includes a processor configured to: cause a history of an executed image quality maintenance process to be stored in a memory as history information; register a plurality of image quality maintenance processes selected from the stored history information in connection with one operation element; and when an operation element connected with a plurality of image quality maintenance processes is operated, execute the plurality of image quality maintenance processes connected with the operation element.

## Description

### Background

### (i) Technical Field

The present disclosure relates to an image forming system and a program.

### (ii) Related Art

Japanese Unexamined Patent Application Publication No. 2015-204074 discloses a job processing apparatus which, when saving of a job connected with a user is not successful, is capable of notifying the user that there is an unsaved job.

Japanese Unexamined Patent Application Publication No. 2011-88327 discloses an image input/output apparatus which enables selection of a method for saving history information in accordance with an attribute of a job.

### Summary

In an image forming apparatus, it is necessary to execute an image quality maintenance process for maintaining the image quality of an image to be printed, such as an image quality adjustment process including density correction, and a cleaning process for cleaning the photoconductor and the like. In particular, in an image forming apparatus for business use, the aforementioned image quality maintenance process needs to be executed more frequently than in a general image forming apparatus for office use. However, when each of a plurality of such image quality maintenance processes needs to be executed independently, a user who is an operator needs to select and execute an image quality maintenance process to be executed from among multiple types of image quality maintenance processes in accordance with the image quality deterioration that has occurred. Furthermore, to recover from a certain image quality deterioration, it may be necessary to execute not only one image quality maintenance process but also a combination of a plurality of image quality maintenance processes. Further, it may not be possible to recover from the image quality deterioration unless the same image quality maintenance process is repeated multiple times. Therefore, it takes a lot of time and effort for the user to select and execute a plurality of image quality maintenance processes corresponding to the image quality deterioration that has occurred.

Accordingly, it is an object of the present disclosure to provide an image forming system and a program with which it is possible to execute a plurality of image quality maintenance processes easily compared with a case where each of the image quality maintenance processes, such as an image quality adjustment process and a cleaning process, is executed independently.

According to a first aspect of the present disclosure, there is provided an image forming system including a processor configured to: cause a history of an executed image quality maintenance process to be stored in a memory as history information; register a plurality of image quality maintenance processes selected from the stored history information in connection with one operation element; and when an operation element connected with a plurality of image quality maintenance processes is operated, execute the plurality of image quality maintenance processes connected with the operation element.

According to a second aspect of the present disclosure, in the image forming system according to the first aspect, the processor may be configured to cause a type of an error that has occurred when the plurality of image quality maintenance processes are executed to be stored in the memory in association with the operation element.

According to a third aspect of the present disclosure, in the image forming system according to the first aspect, the processor may be configured to cause a type of an error that is to be associated with the operation element to be displayed on a display so that the type of the error can be registered, and cause the type of the error of which registration is accepted to be stored in the memory in association with the operation element.

According to a fourth aspect of the present disclosure, in the image forming system according to the second or third aspect, the processor may be configured to, when an error concerning image quality deterioration has occurred, execute the plurality of image quality maintenance processes connected with the operation element associated with the type of the error.

According to a fifth aspect of the present disclosure, in the image forming system according to the first aspect, the processor may be configured to, when executing the plurality of image quality maintenance processes, acquire sheet information concerning a set sheet, and cause the sheet information to be stored in the memory in association with the operation element.

According to a sixth aspect of the present disclosure, in the image forming system according to the fifth aspect, the processor may be configured to, when image quality deterioration is detected, execute a plurality of image quality maintenance processes connected with the operation element associated with sheet information that is same as the acquired sheet information.

According to a seventh aspect of the present disclosure, in the image forming system according to the fifth aspect, the processor may be configured to, when image quality deterioration is detected, display the operation element associated with sheet information that is same as the acquired sheet information on a display, and propose execution of the plurality of image quality maintenance processes by operating the operation element.

According to an eighth aspect of the present disclosure, there is provided a program causing a computer to execute a process including: causing a history of an executed image quality maintenance process to be stored in a memory as history information; registering a plurality of image quality maintenance processes selected from the stored history information in connection with one operation element; and when an operation element connected with a plurality of image quality maintenance processes is operated, executing the plurality of image quality maintenance processes connected with the operation element.

With the image forming system of the first aspect, it is possible to easily execute the plurality of image quality maintenance processes, compared with a case where each of the image quality maintenance processes, such as an image quality adjustment process and a cleaning process, is executed independently.

With the image forming system of the second aspect, it is possible to easily execute the plurality of image quality maintenance processes according to the type of the error.

With the image forming system of the third aspect, it is possible to execute the plurality of image quality maintenance processes according to the type of the error as a result of registration by a user.

With the image forming system of the fourth aspect, it is possible to easily execute the plurality of image quality maintenance processes according to the type of the error.

With the image forming system of the fifth aspect, it is possible to improve the accuracy of image quality adjustment, based on the characteristics of the sheet.

With the image forming system of the sixth aspect, it is possible to easily execute the plurality of image quality maintenance processes according to the sheet information.

With the image forming system of the seventh aspect, it is possible to execute the plurality of image quality maintenance processes according to the sheet information in response to an operation by a user.

With the program of the eighth aspect, it is possible to easily execute the plurality of image quality maintenance processes, compared with a case where each of the image quality maintenance processes, such as an image quality adjustment process and a cleaning process, is executed independently.

### Brief Description of the Drawings

Exemplary embodiments of the present disclosure will be described in detail based on the following figures, wherein:
Fig. 1 illustrates a configuration of an image forming system in an exemplary embodiment of the present disclosure;
Fig. 2 is a block diagram illustrating a hardware configuration of an image forming apparatus in the exemplary embodiment of the present disclosure;
Fig. 3 is a block diagram illustrating a functional configuration of the image forming apparatus in the exemplary embodiment of the present disclosure;
Fig. 4 illustrates an example of a table stored in a data storage section;
Fig. 5 illustrates an example of a home screen of the image forming apparatus in the exemplary embodiment of the present disclosure;
Fig. 6 illustrates an example of a job history information screen displayed when a user selects an icon of job history information on the home screen illustrated in Fig. 5;
Fig. 7 illustrates how the user registers a maintenance job in connection with a pin;
Fig. 8 illustrates how the user adds another maintenance job to a pin for which the maintenance job is registered;
Fig. 9 illustrates how the user registers another maintenance job after adding the other maintenance job to a pin for which a maintenance job is registered;
Fig. 10 illustrates how the user inputs a save name for a pin for which a plurality of maintenance jobs are registered;
Fig. 11 describes how the user executes a pin for which a plurality of maintenance jobs are registered;
Fig. 12 is a flowchart for describing processing of the image forming apparatus when image quality deterioration of a printed image is detected; and
Figs. 13A and 13B illustrate examples of sheet information stored in the data storage section.

### Detailed Description

Next, exemplary embodiments of the present disclosure will be described in detail with reference to the drawings.

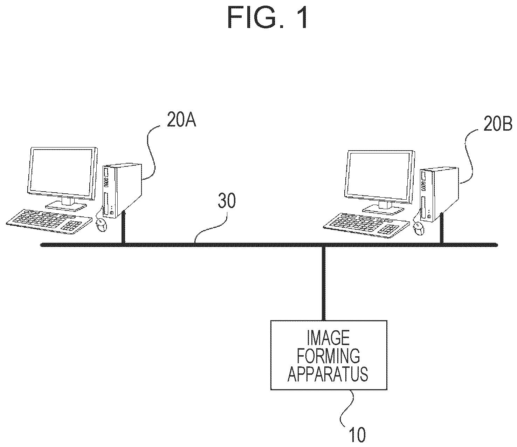

Fig. 1 illustrates a configuration of an image forming system according to an exemplary embodiment of the present disclosure.

As illustrated in Fig. 1, the image forming system according to the exemplary embodiment of the present disclosure includes an image forming apparatus 10 and terminal devices 20A and 20B that are connected to each other via a network 30.

The terminal device 20A generates print data and transmits the generated print data to the image forming apparatus 10 via the network 30. The terminal device 20B sets sheet information and stores the sheet information in a storage device of the terminal device 20B. Once a sheet setting process for the image forming apparatus 10 is performed in the terminal device 20B, the terminal device 20B transmits the set sheet information to the image forming apparatus 10 via the network 30. Then, the sheet information stored in the terminal device 20B is set in the image forming apparatus 10. Here, the "sheet information" refers to information concerning a sheet in which setting values for use in execution of processing, such as a sheet type and a sheet size, are stored for respective setting items.

The image forming apparatus 10 receives the print data transmitted from the terminal device 20A and the sheet information transmitted from the terminal device 20B, and outputs an image corresponding to the print data onto a sheet. The image forming apparatus 10 is a so-called multifunction peripheral having a plurality of functions, such as a print function, a scan function, a copy function, and a facsimile function.

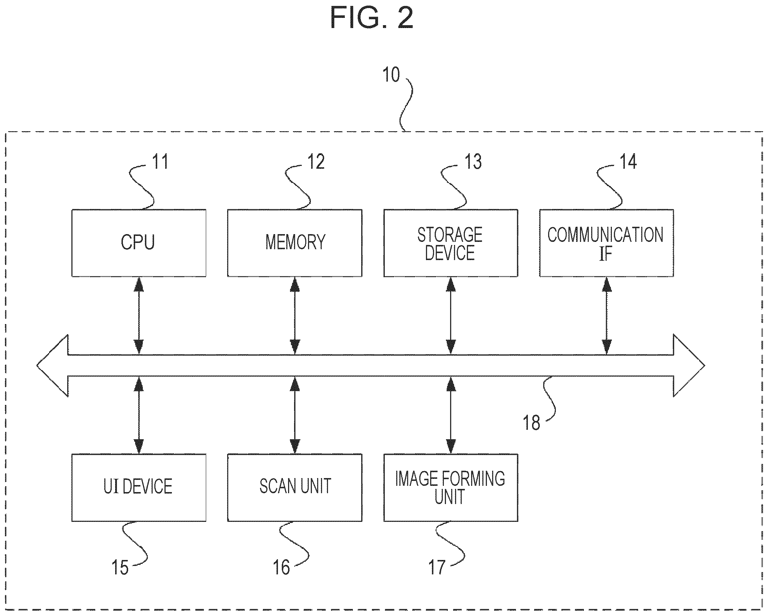

Next, Fig. 2 illustrates a hardware configuration of the image forming apparatus 10 in the image forming system of the present exemplary embodiment.

As illustrated in Fig. 2, the image forming apparatus 10 includes a CPU 11, a memory 12, a storage device 13 such as a hard disk drive, a communication interface (abbreviated as IF) 14 for performing transmission and reception of data with an external device or the like via the network 30, a user interface (abbreviated as UI) device 15 including a touch panel or a liquid-crystal display and a keyboard, a scan unit 16, and an image forming unit 17. These components are connected to each other via a control bus 18.

The image forming unit 17 prints an image on a sheet through charging, exposure, development, transfer, and fixing steps, for example.

The CPU 11 is a processor that executes predetermined processing based on a control program stored in the memory 12 or the storage device 13 to control the operation of the image forming apparatus 10. In the present exemplary embodiment, although the CPU 11 is described as reading and executing the control program stored in the memory 12 or the storage device 13, this is not a limitation. The control program may be provided in the form of being recorded in a computer-readable recording medium. For example, the program may be provided in the form of being recorded in an optical disc, such as a compact disc read-only memory (CD-ROM) or a digital versatile disc read-only memory (DVD-ROM); or in the form of being recorded in a semiconductor memory, such as a Universal Serial Bus (USB) memory or a memory card. The control program may also be acquired from an external device via a communication line connected to the communication interface 14. Furthermore, the control program may be provided as independent application software, or may be incorporated into software for each image forming apparatus 10 as one function thereof.

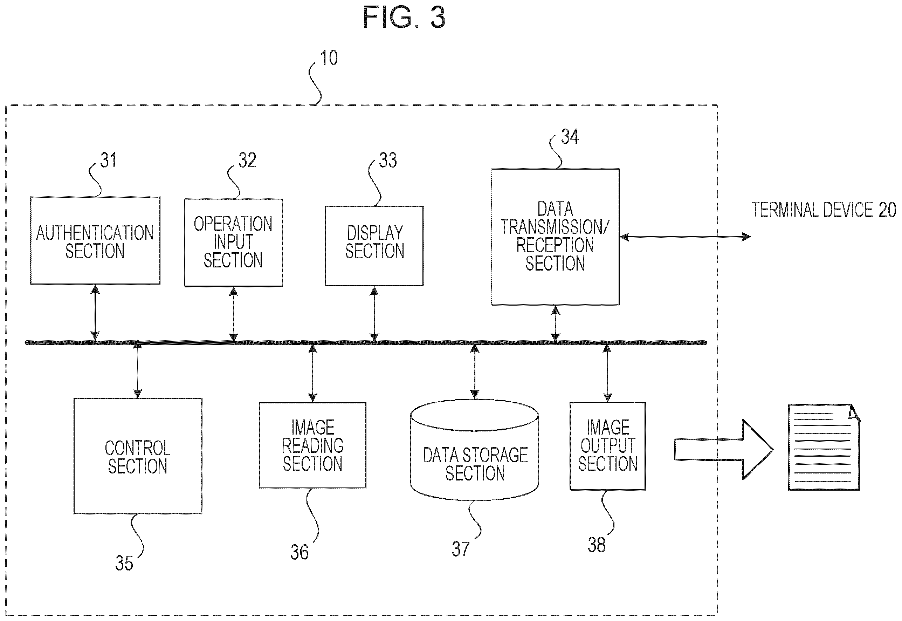

Fig. 3 is a block diagram illustrating a functional configuration of the image forming apparatus 10 implemented through execution of the above-described control program.

As illustrated in Fig. 3, the image forming apparatus 10 of the present exemplary embodiment includes an authentication section 31, an operation input section 32, a display section 33, a data transmission/reception section 34, a control section 35, an image reading section 36, a data storage section 37, and an image output section 38.

The authentication section 31 executes an authentication process for a user who attempts to use the image forming apparatus 10. The display section 33 is controlled by the control section 35 and displays various kinds of information to the user. The operation input section 32 inputs information on various operations performed by the user. The data transmission/reception section 34 performs data transmission/reception with external devices, such as the terminal devices 20A and 20B.

The image output section 38 outputs an image onto a sheet under the control of the control section 35. The image reading section 36 reads a document image from a set document based on control by the control section 35.

The control section 35 controls the overall operation of the image forming apparatus 10, and generates print data based on a print job received from the terminal device 20A via the data transmission/reception section 34. Then, the control section 35 performs control for outputting the generated print data from the image output section 38, control for reading a document image using the image reading section 36, and so on. The data storage section 37 stores the sheet information together with job history information indicating an execution history of various jobs executed by the control section 35, such as a print job, a scan job, a copy job, and a facsimile transmission job. Here, the job history information is history information of the processing contents of jobs executed in the past.

Here, in order to maintain the image quality of an image to be printed, the image forming apparatus 10 may execute an image quality maintenance process such as an image quality adjustment job for performing an image quality adjustment process for in-plane unevenness adjustment, density correction, and misregistration correction; and a cleaning job for performing a cleaning process on a photoconductor, toner, a transfer belt, and the like. In particular, in an image forming apparatus for business use, the image quality maintenance process as described above may be executed more frequency than in an image forming apparatus for general office use. Here, the image quality maintenance process is a process for maintaining the image quality of an image to be printed, such as the image quality adjustment job and the cleaning job described above. Hereinafter, the image quality maintenance process is referred to as a maintenance job.

When each of a plurality of such maintenance jobs needs to be executed independently, the user needs to select and execute a maintenance job to be executed from among the multiple types of maintenance jobs in accordance with the phenomenon of image quality deterioration that has occurred. Also, to recover from a certain image quality deterioration, it may be necessary to execute not only one maintenance job but also a combination of a plurality of maintenance jobs. Further, it may not be possible to recover from the image quality deterioration unless the same maintenance job is repeated multiple times. Thus, it takes a lot of time and effort for the user to select and execute a plurality of maintenance jobs corresponding to the image quality deterioration that has occurred.

Accordingly, in the image forming apparatus 10 of the exemplary embodiment, once a maintenance job such as an image quality adjustment job or a cleaning job is executed, job history information indicating an execution history of the maintenance job is stored in the data storage section 37. That is, the control section 35 causes the job history of the executed maintenance job to be stored in the data storage section 37 as job history information. Further, when executing the maintenance job, the control section 35 acquires, from the job history information, the sheet information of the sheet on which image quality deterioration has been detected immediately before execution of the maintenance job.

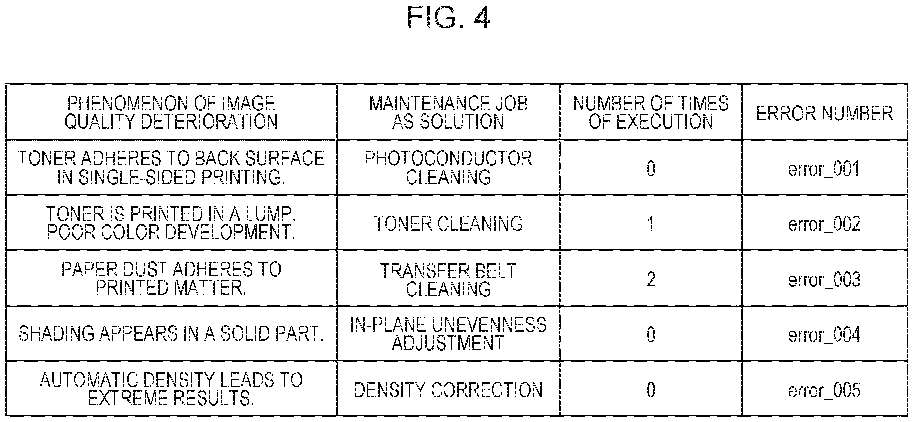

In the data storage section 37, the job history information indicating an execution history of maintenance jobs executed by the control section 35 is stored. As illustrated in Fig. 4, a table linked with the sheet information is stored in the data storage section 37. In the table, the phenomenon of image quality deterioration, the maintenance job as solution, the number of times of execution, and the error number are stored in association with each other. When the same maintenance job is performed multiple times for a phenomenon of image quality deterioration or an error number, the control section 35 counts up and updates the number of times of execution in the table stored in the data storage section 37.

Then, the control section 35 registers the maintenance job selected from the job history information stored in the data storage section 37, in connection with a pin, which is one operation element. Then, the control section 35 causes sheet information to be stored in the data storage section 37 in association with the pin registered in connection with the maintenance job. When the pin registered in connection with the maintenance job is operated, the control section 35 executes the maintenance job registered in connection with the operated pin.

The control section 35 also registers a plurality of maintenance jobs selected from the job history information stored in the data storage section 37, in connection with a pin, which is one operation element. Then, the control section 35 causes sheet information to be stored in the data storage section 37 in association with the pin registered in connection with the plurality of maintenance jobs. When the pin registered in connection with the plurality of maintenance jobs is operated, the control section 35 executes the plurality of maintenance jobs connected with the operated pin.

That is, by selecting, through a user operation, a pin registered in connection with a plurality of maintenance jobs, the plurality of maintenance jobs registered in connection with the pin can be executed again. Here, the plurality of maintenance jobs may be different types of maintenance jobs, may be the same type of maintenance jobs, or may be the same maintenance job.

For example, the control section 35 can register multiple types of cleaning jobs, such as a toner cleaning job and a transfer belt cleaning job, in connection with a pin; can register multiple instances of the same cleaning job, such as executing a toner cleaning job multiple times, in connection with a pin; and can register multiple types of maintenance jobs with different functions, such as a cleaning job and an image quality adjustment job, in connection with a pin.

Next, an operation method for registering a plurality of maintenance jobs in connection with a pin in the image forming apparatus 10 according to the present exemplary embodiment will be described with reference to the drawings.

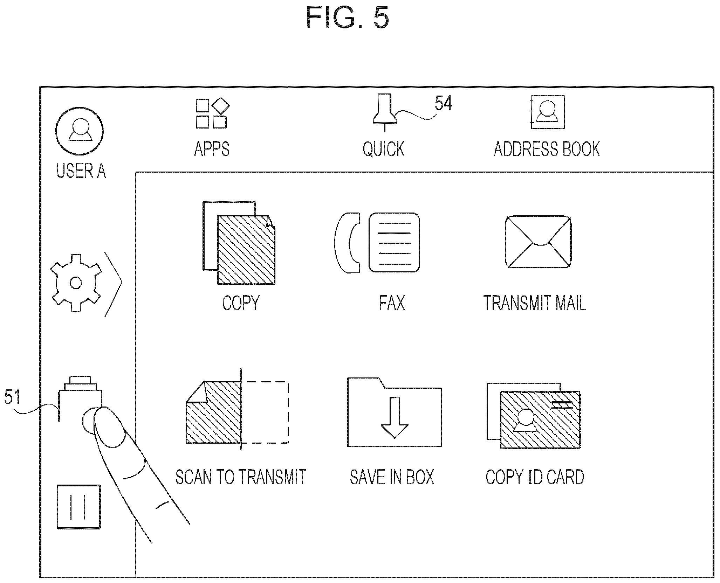

Fig. 5 illustrates an example of a home screen in the image forming apparatus 10 according to the present exemplary embodiment.

In the example of the home screen illustrated in Fig. 5, apps for executing various functions, such as copying, faxing, and scanning, are displayed on a touch panel. Fig. 5 illustrates a state in which the user selects an icon 51 of the job history information.

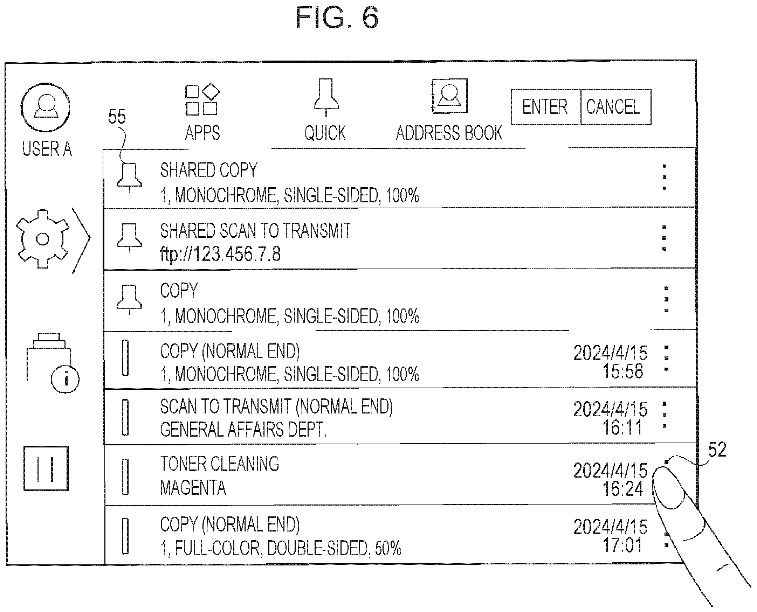

Fig. 6 illustrates an example of a job history information screen displayed when the user selects the icon 51 of the job history information. In the example of the job history information screen illustrated in Fig. 6, a copy job and a scan transmission job registered in connection with respective pins, a normally ended copy job, a toner cleaning job, and the like are displayed. That is, in the example of the job history information screen illustrated in Fig. 6, the job history information of the jobs executed in the past is displayed in a list together with the jobs registered in connection with the respective pins. For each of the jobs registered in connection with the respective pins, a pin mark 55 indicating that the job is registered in connection with the pin is displayed.

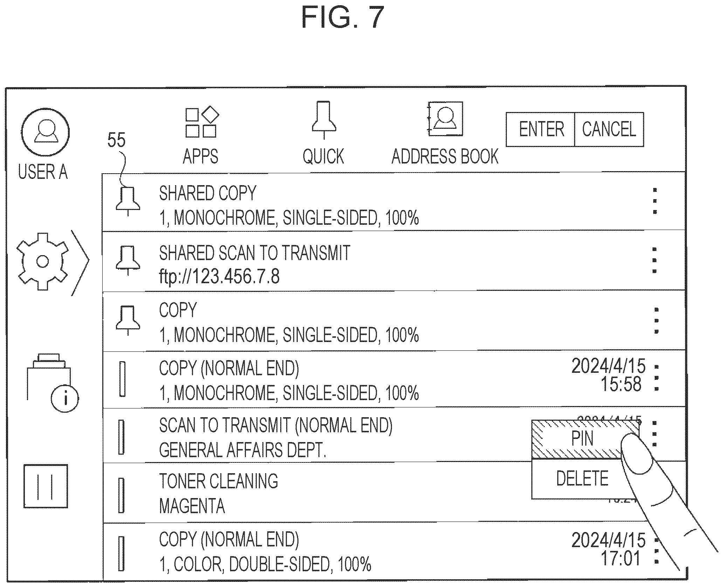

For example, when the toner cleaning job displayed as job history information is registered in connection with a pin, the user operates an operation menu icon 52 of the toner cleaning job. Then, as illustrated in Fig. 7, various operation menus for the toner cleaning job are displayed. Here, the user selects an operation menu "Pin" from among the plurality of displayed operation menus.

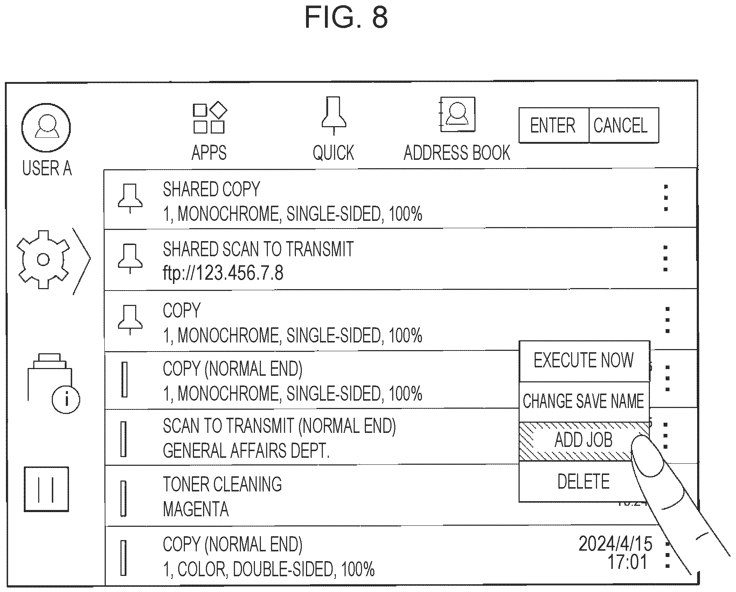

Then, as illustrated in Fig. 8, various operation menus for the "Pin" operation are displayed. Here, the user selects an operation menu "Add job" from the plurality of displayed operation menus.

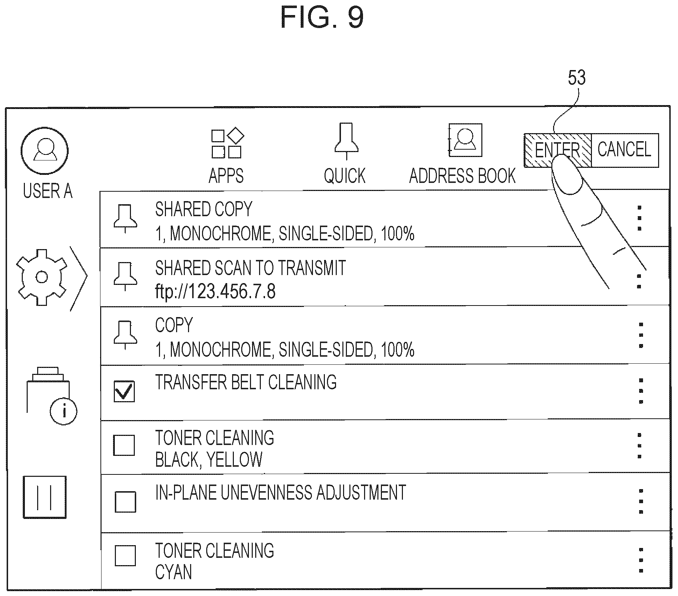

Then, as illustrated in Fig. 9, a plurality of maintenance jobs are displayed on the job history information screen in accordance with the job history information stored in the data storage section 37. Here, the user selects a transfer belt cleaning job from the plurality of displayed maintenance jobs, and operates an operation menu icon 53.

At this time, the control section 35 adds the transfer belt cleaning job to the toner cleaning job registered in connection with the pin. In other words, the control section 35 registers the toner cleaning job and the transfer belt cleaning job, which are a plurality of maintenance jobs selected from the job history information stored in the data storage section 37, in connection with a pin, which is one operation element.

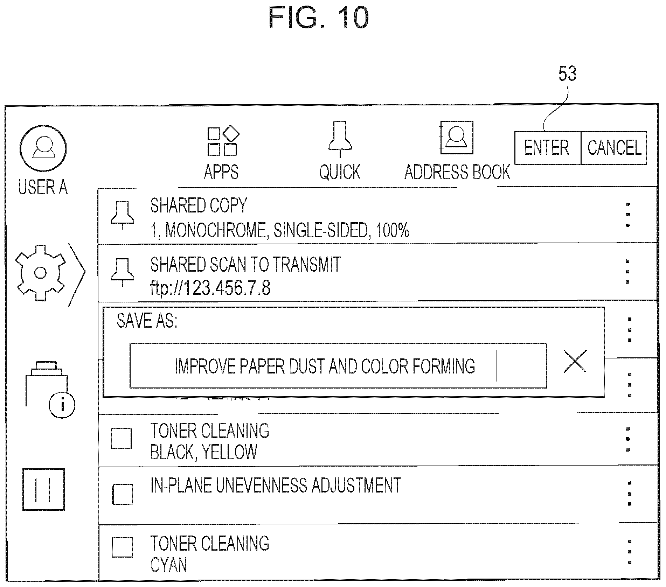

Then, as illustrated in Fig. 10, on the job history information screen, a screen for inputting a save name is displayed for the pin registered in connection with the plurality of maintenance jobs. Here, the user inputs the save name "Improve sheet dust and color forming" for the pin registered in connection with the toner cleaning job and the transfer belt cleaning job.

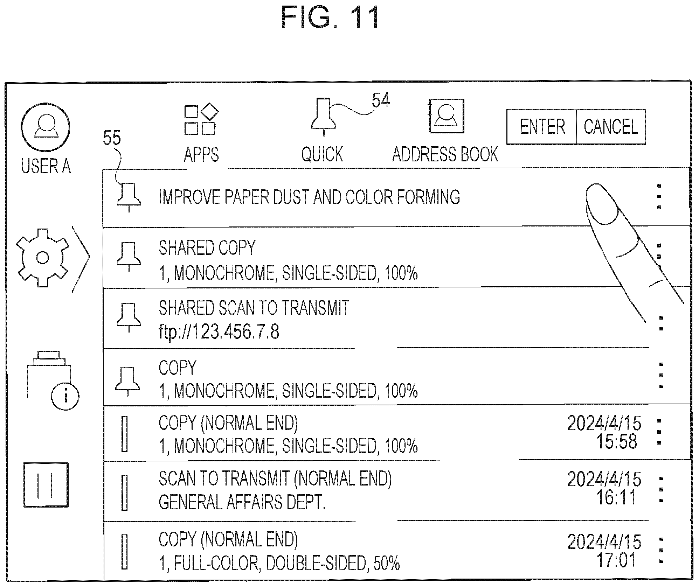

When the save name is input and the operation menu icon 53 is operated as illustrated in Fig. 10, the pin mark 55 with the newly registered name "Improve sheet dust and color forming" is displayed at the top of the list in the job history information screen as illustrated in Fig. 11. The job history information screen illustrated in Fig. 11 is also displayed when an icon 54 named "Quick" is operated on the home screen illustrated in Fig. 5 or the job history information screen illustrated in Fig. 11.

When the pin registered in connection with the plurality of maintenance jobs is operated, the control section 35 executes the plurality of maintenance jobs registered in connection with the pin. Here, the user can operate the pin mark 55 named "Improve sheet dust and color development" on the job history information screen illustrated in Fig. 11 to execute the toner cleaning job and the transfer belt cleaning job registered in connection with the pin mark 55.

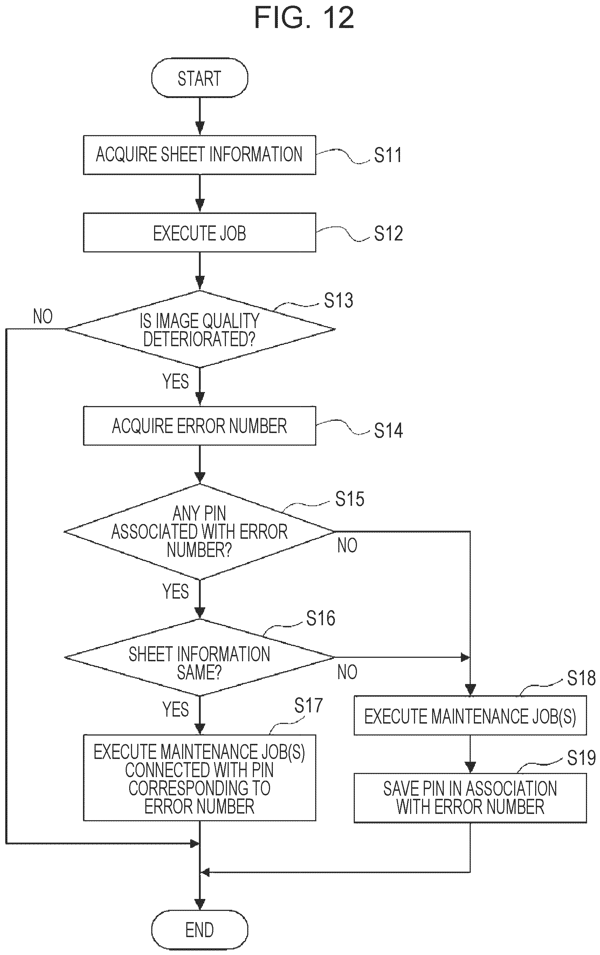

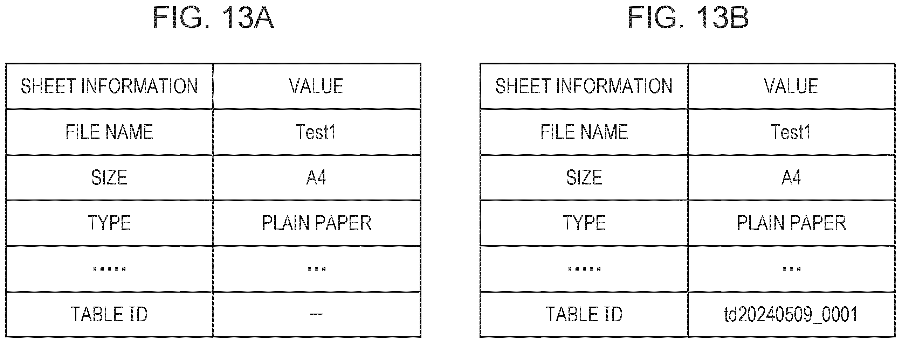

Next, an example of a process in which the control section 35 executes a maintenance job in accordance with an error number indicating image quality deterioration will be described with reference to Fig. 12 and Figs. 13A and 13B.

First, in step S11, the control section 35, upon receiving a print job from the terminal device 20A, acquires sheet information concerning a sheet from the terminal device 20B and stores the sheet information in the data storage section 37. For example, as illustrated in Fig. 13A, the sheet information includes information concerning the sheet, such as a file name and information concerning various setting items such as sheet size, sheet type, and sheet thickness.

Next, in step S12, the control section 35 executes the print job.

Next, in step S13, the control section 35 determines whether or not image quality deterioration of the printed image has been detected. If image quality deterioration is detected, the control section 35 proceeds to the next step S14. If image quality deterioration is not detected, the control section 35 ends the process.

Next, in step S14, the control section 35 acquires the error number, i.e., the type of error indicating the phenomenon of image quality deterioration or the cause of image quality deterioration.

Next, in step S15, the control section 35 determines whether or not there is a maintenance job registered in connection with a pin corresponding to the error number. If there is a maintenance job registered in connection with the pin corresponding to the error number, the control section 35 proceeds to the next step S16. If there is no maintenance job registered in connection with the pin corresponding to the error number, the control section 35 proceeds to the next step S18.

Next, in step S16, the control section 35 determines whether or not the sheet information for which the maintenance job registered in connection with the pin has been executed is the same as the sheet information acquired in step S 11. If the sheet information for which the maintenance job registered in connection with the pin has been executed is the same as the sheet information acquired in step S11, the control section 35 proceeds to the next step S17. If the sheet information is different, the control section 35 proceeds to the next step S18.

Next, in step S17, the control section 35 executes one or a plurality of maintenance jobs registered in connection with the pin corresponding to the error number in the table of the same sheet information as the sheet information acquired in step S11, and ends the process.

That is, the control section 35, upon detecting image quality deterioration, executes one or a plurality of maintenance jobs connected with the pin associated with the error number of the same sheet information as the acquired sheet information. In addition, at this time, the control section 35 may display the one or plurality of maintenance jobs connected with the pin associated with the error number of the same sheet information as the acquired sheet information on the display section 33, and propose execution of the one or plurality of maintenance jobs by operating the pin mark 55.

Next, in step S18, the control section 35 executes one or a plurality of maintenance jobs in response to a user operation if there is no pin corresponding to the error number in step S15 or if the sheet information is different in step S16.

Next, in step S19, the control section 35 causes the sheet information acquired in step S11 to be stored in the data storage section 37 in association with the error number acquired in step S14 and the one or plurality of executed maintenance jobs. That is, the control section 35 registers the sheet information, the error number, and the one or plurality of maintenance jobs in connection with a pin and causes them to be stored in the data storage section 37.

At this time, the control section 35 may display the error number to be associated with the executed maintenance job(s) on the display section 33 so that the error number can be registered. In this case, the control section 35 causes the sheet information, the error number input through a user operation, and the one or plurality of executed maintenance jobs in the data storage section 37 in association with each other.

Next, a process of linking the sheet information acquired from the terminal device 20B with a table ID associating the error number with the maintenance job(s) will be described.

For example, as illustrated in Fig. 13A, the sheet information acquired from the terminal device 20B includes information concerning the sheet, such as the file name and information concerning various setting items such as sheet size, sheet type, and sheet thickness. For example, based on the sheet information acquired in step S11, the control section 35 acquires a table ID linked with the sheet information from the data storage section 37. Then, as illustrated in Fig. 13B, the control section 35 links the table ID to the sheet information, and causes the sheet information to be stored in the data storage section 37.

In this way, the control section 35, upon detecting image quality deterioration, can execute a plurality of maintenance jobs registered in connection with the pin in accordance with the error number of the table ID associated with the same sheet information as the acquired sheet information.

In the exemplary embodiment, while the case has been described where two types of cleaning jobs, i.e., the toner cleaning job and the transfer cleaning job, are registered in connection with the pin, the present disclosure is not limited thereto. For example, the present disclosure is also applicable to a case where the same maintenance job is executed multiple times, such as a case where the toner cleaning job is executed multiple times. The present disclosure is also suitably applicable to a case where multiple types of maintenance jobs having different functions, such as a cleaning job and an image quality adjustment job, are registered in connection with a pin. The present disclosure is also suitably applicable to a case where three or more maintenance jobs are registered in connection with a pin.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The term "system" in the present exemplary embodiment includes both a system composed of a plurality of apparatuses and a system composed of a single apparatus.

The techniques of the present disclosure can also be applied to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An image forming system comprising:
   a processor configured to:
   cause a history of an executed image quality maintenance process to be stored in a memory as history information;
   register a plurality of image quality maintenance processes selected from the stored history information in connection with one operation element; and
   when an operation element connected with a plurality of image quality maintenance processes is operated, execute the plurality of image quality maintenance processes connected with the operation element.
(((2))) The image forming system according to (((1))), wherein the processor is configured to cause a type of an error that has occurred when the plurality of image quality maintenance processes are executed to be stored in the memory in association with the operation element.
(((3))) The image forming system according to (((1))), wherein the processor is configured to cause a type of an error that is to be associated with the operation element to be displayed on a display so that the type of the error can be registered, and cause the type of the error of which registration is accepted to be stored in the memory in association with the operation element.
(((4))) The image forming system according to (((2))) or (((3))), wherein the processor is configured to, when an error concerning image quality deterioration has occurred, execute the plurality of image quality maintenance processes connected with the operation element associated with the type of the error.
(((5))) The image forming system according to (((1))), wherein the processor is configured to, when executing the plurality of image quality maintenance processes, acquire sheet information concerning a set sheet, and cause the sheet information to be stored in the memory in association with the operation element.
(((6))) The image forming system according to (((5))), wherein the processor is configured to, when image quality deterioration is detected, execute a plurality of image quality maintenance processes connected with the operation element associated with sheet information that is same as the acquired sheet information.
(((7))) The image forming system according to (((5))), wherein the processor is configured to, when image quality deterioration is detected, display the operation element associated with sheet information that is same as the acquired sheet information on a display, and propose execution of the plurality of image quality maintenance processes by operating the operation element.
(((8))) A program causing a computer to execute a process comprising:
   causing a history of an executed image quality maintenance process to be stored in a memory as history information;
   registering a plurality of image quality maintenance processes selected from the stored history information in connection with one operation element; and
   when an operation element connected with a plurality of image quality maintenance processes is operated, executing the plurality of image quality maintenance processes connected with the operation element.

With the image forming system of (((1))), it is possible to easily execute the plurality of image quality maintenance processes, compared with a case where each of the image quality maintenance processes, such as an image quality adjustment process and a cleaning process, is executed independently.

With the image forming system of (((2))), it is possible to easily execute the plurality of image quality maintenance processes according to the type of the error.

With the image forming system of (((3))), it is possible to execute the plurality of image quality maintenance processes according to the type of the error as a result of registration by a user.

With the image forming system of (((4))), it is possible to easily execute the plurality of image quality maintenance processes according to the type of the error.

With the image forming system of (((5))), it is possible to improve the accuracy of image quality adjustment, based on the characteristics of the sheet.

With the image forming system of (((6))), it is possible to easily execute the plurality of image quality maintenance processes according to the sheet information.

With the image forming system of (((7))), it is possible to execute the plurality of image quality maintenance processes according to the sheet information in response to an operation by a user.

With the program of (((8))), it is possible to easily execute the plurality of image quality maintenance processes, compared with a case where each of the image quality maintenance processes, such as an image quality adjustment process and a cleaning process, is executed independently.

## Claims

1. An image forming system comprising:
a processor configured to:
cause a history of an executed image quality maintenance process to be stored in a memory as history information;
register a plurality of image quality maintenance processes selected from the stored history information in connection with one operation element; and
when an operation element connected with a plurality of image quality maintenance processes is operated, execute the plurality of image quality maintenance processes connected with the operation element.

2. The image forming system according to claim 1, wherein the processor is configured to cause a type of an error that has occurred when the plurality of image quality maintenance processes are executed to be stored in the memory in association with the operation element.

3. The image forming system according to claim 1, wherein the processor is configured to cause a type of an error that is to be associated with the operation element to be displayed on a display so that the type of the error can be registered, and cause the type of the error of which registration is accepted to be stored in the memory in association with the operation element.

4. The image forming system according to claim 2 or 3, wherein the processor is configured to, when an error concerning image quality deterioration has occurred, execute the plurality of image quality maintenance processes connected with the operation element associated with the type of the error.

5. The image forming system according to claim 1, wherein the processor is configured to, when executing the plurality of image quality maintenance processes, acquire sheet information concerning a set sheet, and cause the sheet information to be stored in the memory in association with the operation element.

6. The image forming system according to claim 5, wherein the processor is configured to, when image quality deterioration is detected, execute a plurality of image quality maintenance processes connected with the operation element associated with sheet information that is same as the acquired sheet information.

7. The image forming system according to claim 5, wherein the processor is configured to, when image quality deterioration is detected, display the operation element associated with sheet information that is same as the acquired sheet information on a display, and propose execution of the plurality of image quality maintenance processes by operating the operation element.

8. A program causing a computer to execute a process comprising:
causing a history of an executed image quality maintenance process to be stored in a memory as history information;
registering a plurality of image quality maintenance processes selected from the stored history information in connection with one operation element; and
when an operation element connected with a plurality of image quality maintenance processes is operated, executing the plurality of image quality maintenance processes connected with the operation element.
